(19) Europäisches Patentamt
European Patent Office
Office européen des brevets

(11) Numéro de publication: **0 160 636**
**A2**

(12) # DEMANDE DE BREVET EUROPEEN

(21) Numéro de dépôt: 85870057.8

(22) Date de dépôt: 24.04.85

(51) Int. Cl.⁴: C 08 F 291/18
C 08 F 255/02
//(C08F255/02, 230:08)

(30) Priorité: 26.04.84 BE 212824

(43) Date de publication de la demande:
06.11.85 Bulletin 85/45

(84) Etats contractants désignés:
AT BE CH DE FR GB IT LI LU NL SE

(71) Demandeur: CABLERIES ET CORDRIES DU HAINAUT
S.A. en abrégé CABLERIES DE DOUR
Rue du Roi Albert, 57
B-7270 Dour(BE)

(71) Demandeur: S.A. FABRICABLE KABELFABRIEK VAN
HUIZINGEN N.V. en abrégé FABRICABLE
Rue du Marché 79
B-1000 Bruxelles(BE)

(72) Inventeur: Grommen, Marc
Lennekemarelaan 38 Boîte 21
B-1940 Zaventem(BE)

(72) Inventeur: Debie, F.
Lennekemarelaan 38 Boîte 15
B-1940 Zaventem(BE)

(72) Inventeur: Bastin, Pierre
Rue du Parc 10
B-7270 Dour(BE)

(72) Inventeur: Delaunois, Guy
Voie du Prêtre 20
B-7270 Dour(BE)

(72) Inventeur: Polart, Jules
Chaussée Brunehault 380
B-6510 Morlanwelz(BE)

(72) Inventeur: Geuskens, Georges
Avenue des Cailles 46
B-1170 Bruxelles(BE)

(74) Mandataire: Kuborn, Jacques et al,
Office Hanssens S.P.R.L. Square Marie-Louise, 40 (bte 19)
B-1040 Bruxelles(BE)

(54) **Procédé de production de centres actifs dans des polyoléfines, produit intermédiaire obtenu, et procédé de production de polyoléfines réticulables par greffage d'un composé hydrolysable du silane.**

(57) L'invention concerne un procdé de production de centresactifs, ocygénés, stables, dans une composition formée d'une polyoléfine ou un mélange de polyoléfines, par iradiation de la composition et oxygénation, caractérisé en ce que l'irradiation est conduite en présence d'air, pour râliser une oxygénation des centres actifs sous irradiation.

Elle concerne également le produit intermédiaire, irradié, obtenu, ainsi qu'un procédé de production de polyoléfines réticulables par greffage d'un composé hydrolysable du silane.

EP 0 160 636 A2

Procédé de production de centres actifs dans des polyoléfines, produit intermédiaire obtenu, et procédé de production de polyoléfines réticulables par greffage d'un composé hydrolysable du silane.

---

La présente invention concerne un nouveau procédé de production de centres actifs, oxygénés, stables, dans des polyoléfines, le produit intermédiaire obtenu, et un procédé de production de polyoléfines réticulables par greffage d'un composé hydrolysable du silane.

La production de polyoléfines réticulables par greffage d'un composé de silane est connue dans la technique.

Le brevet BE-A-794.718 divulgue un procédé de greffage de silane sur une polyoléfine, qui consiste à faire réagir du polyéthylène ou un copolymère de l'éthylène avec une proportion mineure de propylène et/ou de butylène avec un silane, en présence d'un peroxyde, à une température supérieure à 140°C.

La publication FR-A-2 146 066 divulgue un procédé de greffage d'un silane sur une polyoléfine, dans lequel on expose à un rayonnement ultra-violet et/ou à une température supérieure à 130°C un mélange d'une polyoléfine et d'un silane.

La publication DE-A-2 439 514 divulgue un procédé de production de matières thermoplastiques ou d'élastomères réticulables, qui consiste essentiellement à soumettre à un rayonnement à haute énergie un mélange du polymère et d'un composé du silane.

Enfin, les publications DE-B-1 175 884 et FR-A-1 288 733 divulguent que l'on peut obtenir des centres oxygénés, capables de provoquer le greffage de monomères polymérisables durant une période prolongée, sur des molécules de polyéthylène, par irradiation à très haute intensité du polyéthylène en l'absence d'oxygène,

suivie dans les cinq minutes d'une mise en contact du polymère irradié avec de l'oxygène.

De façon surprenante, on a constaté selon l'invention qu'il était possible d'obtenir des centres actifs, oxygénés, stables, sur des polyoléfines en les soumettant à un rayonnement ionisant en présence d'air.

On a également constaté que les centres actifs ainsi crées avaient - lorsque la polyoléfine irradiée était mise en contact, par exemple par malaxage, avec une polyoléfine non irradiée - la propriété de créer d'autres centres actifs, avec un effet multiplicateur, dans la polyoléfine non irradiée.

Ces propriétés - stabilité et effet multiplicateur - des centres actifs de la polyoléfine irradiée présentent un intérêt économique évident, puisqu'il est alors possible, selon l'invention, de n'irradier qu'une fraction de la masse à traiter, la fraction irradiée pouvant ensuite être conservée pour être utilisée ultérieurement. En particulier, ceci dispense l'utilisateur de disposer d'un appareillage d'irradiation, lourd et coûteux.

Selon une caractéristique de l'invention, on se propose de fournir un procédé de production de centres actifs, oxygénés, stables, dans une composition formée d'une polyoléfine ou un mélange de polyoléfines, par irradiation de la composition et oxygénation, dans lequel l'irradiation est conduite en présence d'air, pour réaliser une oxygénation des centres actifs sous irradiation.

Selon une autre caractéristique, on soumet la composition irradiée à une dose de rayonnement comprise entre 0,3 et 15 Mrad.

Selon une autre caractéristique de l'invention, on fournit un produit intermédiaire pour la production de polyoléfines réticulables par greffage d'un composé hydrolysable du silane, constitué d'une composition formée

Selon une autre caractéristique de l'invention, on fournit un produit intermédiaire pour la production de polyoléfines réticulables par greffage d'un composé hydrolysable du silane, constitué d'une composition formée d'une polyoléfine ou un mélange de polyoléfines, irradiée par le procédé de l'invention, ce produit intermédiaire pouvant comprendre un catalyseur de condensation de silanol.

Selon d'autres caractéristiques, l'invention concerne un procédé de production de polyoléfines réticulables par greffage d'un composé hydrolysable du silane, qui consiste à malaxer la composition irradiée avec une composition de polyoléfine non irradiée et un composé hydrolysable de silane; le malaxage se fait en présence d'un catalyseur de condensation de silanol; la composition irradiée et la composition non irradiée sont identiques et sont formées d'une seule polyoléfine; la composition irradiée est formée d'une seule polyoléfine, et la composition non irradiée d'un mélange de polyoléfines; la composition irradiée est chauffée avant malaxage, de préférence à une température de 100°C.

Selon un mode de réalisation préféré de l'invention, le procédé de production de polyoléfines réticulables consiste à malaxer un mélange comprenant, sur base de 100% en poids:

- 1 à 10% en poids du composé du silane
- 0 à 80% en poids de la composition non irradiée
- 10 à 98% en poids de la composition irradiée,

éventuellement en présence d'une quantité de 0,07 à 1% en poids, sur base du poids du mélange, de catalyseur de réticulation.

Le composé hydrolysable du silane est de préférence un vinylsilane de formule $R_1-Si(R_2)_3$, dans laquelle $R_1$ représente un radical hydrocarboné, hydrocarbonoxy insaturé aminé ou non et monovalent, et $R_2$ représente un radical méthoxy, éthoxy, méthoxy-éthoxy, acétoxy ou

halogéné, tandis que le catalyseur de réticulation est un composé organique de l'étain, du plomb ou du zinc de type dilaurate, diacétate ou dioctoate de dibutyle, ou un autre acide de Lewis.

En l'absence de catalyseur de réticulation, le composé du silane est de préférence choisi dans le groupe du vinyltrichlorosilane et du vinyltriacétoxysilane.

Enfin, l'invention concerne une composition réticulable, obtenue par le procédé, et une composition réticulée, obtenue par hydrolyse de cette composition.

D'autres aspects, caractéristiques et avantages de l'invention apparaîtront de la description et des exemples qui suivent.

EXEMPLE 1

Dans cet exemple, on applique un mode opératoire en deux étapes pour le greffage de vinylsilane sur du polyéthylène basse densité "STAMYLAN 2810" de DSM.

On soumet à une irradiation par rayons gamma le polyéthylène, en présence d'air. Après irradiation, le polyéthylène est imprégné de vinyltriméthoxyéthoxysilane (A 172 de Union Carbide); le mélange est malaxé jusqu'à fusion, pendant 5 min. à 10 tours/min, dans un malaxeur Brabender à une température de 150°C (la température de la masse du polymère ne dépasse pas 155°C). On presse ensuite des plaques de 1 mm d'épaisseur à 170°C sous une pression de 180 kg $cm^{-2}$ pendant 3 min., et on les refroidit par circulation d'eau. Ces plaques sont ensuite découpées en fragments que l'on remalaxe avec le catalyseur de réticulation (dibutyl dilaurate d'étain ou, en abrégé DBTDL), et on prépare de nouvelles plaques dans lesquelles ont découpe des éprouvettes soumises à hydrolyse.

Les résultats obtenus sont rassemblés au tableau 1 qui suit.

Tableau 1: Taux de fluage en fonction de la dose d'irradiation, de la concentration de vinylsilane et de la concentration de catalyseur

| Dose (Mrads) | Concentration vinylsilane | Concentration catalyseur | Taux de fluage (10 min-200°C-2 bars) |
|---|---|---|---|
| 1,5 | 10% | 0,7% | 30% |
| 3 | " | " | 20% |
| 4,5 | " | " | 20% |
| 3 | 7,5% | " | 20% |
| 3 | 5% | " | 25% |
| 3 | 10% | 0,35% | 20% |
| 3 | 7,5% | " | 15% |
| 3 | 4% | " | 25% |
| 3 | 3% | " | 20% |

EXEMPLE 2

Le mode opératoire suivi dans cet exemple est semblable à celui de l'exemple 1, si ce n'est que l'on supprime l'étape de malaxage polyéthylène + vinyltriméthoxyéthoxysilane; le vinylsilane est mis en contact avec le polyéthylène irradié auquel on ajoute le mélange-mère de catalyseur. Après une heure, le mélange hétérogène est malaxé au Brabender. Des échantillons sont découpés dans les plaques pressées après malaxage. Les résutats de fluage de ces échantillons, après hydrolyse, sont rassemblés au tableau 2 qui suit.

Tableau 2: Taux de fluage avec un seul malaxage en fonction de la concentration en vinylsilane et en catalyseur (irradiation: 3 Mrads)

| Concentration vinylsilane | Concentration DBTDL | Taux de fluage (10 min-200°C-2 bars) |
|---|---|---|
| 10% | 0,35% | 20% |
| 7,5% | " | " |
| 5% | " | " |
| 7,5% | 0,7% | 20% |
| 5% | " | 20% |

Comme on peut le constater des tableaux 1 et 2, le malaxage unique fournit des résultats équivalents à ceux obtenus par le malaxage en deux étapes, ce qui ouvre la possibilité de greffer le vinylsilane sur le polyéthylène irradié au cours d'une opération d'extrusion, par exemple pour former un câble, et de réaliser une opération continue, sans passer par un malaxage intermédiaire, toujours discontinu.

EXEMPLE 3

On suit un mode opératoire semblable à celui de l'exemple 2, mais en n'irradiant qu'une partie du polyéthylène et en effectuant ensuite le malaxage d'un mélange polyéthylène irradié + polyéthylène non irradié + vinylsilane + catalyseur de réticulation.

Les résultats sont rassemblés au tableau 3

Tableau 3: Taux de fluage avec un seul malaxage en fonction de la concentration en polyéthylène non traité (0,35% DBTDL)

| Dose (Mrads) | Concentration vinylsilane | Concentration poléth. non traité | Taux de fluage (10 min-200°C-2 bars) |
|---|---|---|---|
| 3 | 10% | 0% | 20% |
| 3 | 10% | 10% | 20% |
| 3 | 10% | 20% | 20% |
| 3 | 10% | 30% | 15% |
| 3 | 10% | 40% | 15% |
| 3 | 10% | 50% | 10% |

Comme le montrent les résultats du tableau 3, l'addition de polymère non irradié, en grande proportion, améliore le taux de fluage. Elle améliore également l'aspect final de l'échantillon.

EXEMPLE 4

L'expérience à montré que, au cours du malaxage, le vinylsilane semble lubrifier le polymère, abaissant le couple et le taux de cisaillement. Ceci réduit la production de radicaux libres responsables du greffage du silane, et la vitesse de greffage du vinylsilane est alors fortement réduite.

Dans le présent exemple, on a alors modifié le mode opératoire pour faire diffuser le vinylsilane dans le polymère avant malaxage, en chauffant le mélange pendant 1 heure à 100°C.

Après chauffage et diffusion du vinylsilane, le mélange subit un malaxage unique, comme précédemment.

Le tableau 4 qui suit rassemble les résultats de cet exemple, pour différentes conditions de traitement.

Tableau 4: Résultats d'essais avec chauffage intermédiaire.

| Traitement thermique | % vinyl-silane | % polyéthylène non traité | Taux de fluage: 20% max. (10 min-200°C-2 bars*), pour dose de rayonnement 2,5 Mrads | 1 Mrad |
|---|---|---|---|---|
| - | 10 | 0 | 1/4 | 0/4 |
| 1 h-100°C | 5 | 40 | 4/4 | 4/4 |
| 1 h-100°C | 10 | 40 | 4/4 | 3/4 |

* Le rapport indique la fraction des échantillons satisfaisants.

Les résultats de ce tableau montrent que le préchauffage du mélange améliore l'efficacité du greffage, et que l'addition d'une quantité de 40% de polyéthylène non irradié fournit d'excellentes propriétés. Tous les échantillons fluent à moins de 20% sous 2 bars à 200°C et tiennent en moyenne plus de 16 minutes.

Pour des raisons de sécurité, on a développé une variante de ce mode opératoire, dans lequel on chauffe uniquement le polyéthylène irradié (exemple 5).

EXEMPLE 5

Du polyéthylène "STAMYLAN 2810" de DSM est irradié sous air avec une dose de 2,5 Mrads de rayons gamma une semaine avant le test.

On chauffe à 100°C, 25 kg de polyéthylène irradié que l'on mélange à 20 kg de polyéthylène non traité, 1,5 litres de vinyltriéthoxysilane et 2,5 kg d'un mélange-mère de polyéthylène contenant le catalyseur de réticulation (dibutyl dilaurate d'étain).

La composition pondérale du mélange est la suivante:

- 51% polyéthylène irradié et chauffé
- 45,65% polyéthylène non traité
- 3% vinyltriéthoxysilane
- 0,35% dibutyl dilaurate d'étain

Ce mélange est extrudé sous forme d'un câble, dans les conditions d'extrusion classiques pour le "STAMYLAN" de DSM, avec les débits mesurés de 154, 311 et 657 g/min à 7,5, 15 et 30 tours/min.

En vue de l'analyse, on prélève un morceau de 0,3 g de la gaine du câble, que l'on presse à 170°C sous 180 kg/cm$^2$ pendant 30 secondes afin d'obtenir un film mince et transparent.

Le spectre infra-rouge de ce film montre la superposition du spectre du polyéthylène et du spectre d'un tris-éthoxysilane.

L'analyse des bandes d'absorption dues au silane indique que le vinyltriéthoxysilane est peu ou pas hydrolysé; l'absence de bandes d'absorption à 1602 cm$^{-1}$ indique que les doubles liaisons >C=C< du silane ont disparu dans la masse extrudée, et le silane a donc bien été greffé sur le polyéthylène. L'aspect de la bande d'absorption entre 1000 et 1100 cm$^{-1}$ montre que le silane n'a pas ou peu été hydrolysé, il est donc disponible pour une hydrolyse conduisant à une réticulation du polyéthylène.

La mesure du taux de gel par extraction par le p-xylène avant hydrolyse et après hydrolyse de 16 heures à 100°C indique que le taux de gel passe de 10% à 70%, confirmant ainsi les propriétés de réticulation par hydrolyse du polyéthylène traité.

En ce qui concerne le fluage, la gaine non hydrolysée casse très rapidement lors d'essais de fluage à 200°C. Après hydrolyse, on observe un fluage de 60% après dix minutes, et ce taux reste ensuite constant pendant une vingtaine de minutes avant cassure de l'échantillon. Ce taux de fluage est tout-à-fait acceptable pour un câble industriel.

Dans les exemples qui précède, on a utilisé un polyéthylène basse densité "STAMYLAN 2810" de DSM, caractérisé par une masse en nombre de 24000, une masse en

poids de 11700, une masse Z de 330000, une hétérodispersité de 4,9 impliquant un grand nombre de branchements, et un indice de fluidité de 0,28.

D'autres essais ont été faits avec un polyéthylène linéaire basse densité de UNIFOS (8010 sous forme de poudre) qui donne des résultats légèrement meilleurs que le "STAMYLAN" de DSM.

EXEMPLE 6

Dans le présent exemple, on a irradié le polyéthylène UNIFOS 8010 sous air à une dose de 2,5 Mrads. On l'a ensuite malaxé dans le Brabender dans diverses compositions avec du polyéthylène basse densité non irradié (STAMYLAN 2810) et 4,5% de vinyltriméthoxyéthoxysilane (A 172 de UNION CARBIDE). Ces malaxages sont réalisés dans les conditions suivantes:

1) homogénéisation 10 t/min 170°C
2) Malaxage 60 t/min 180°C
   Durée: voir tableau ci-après
3) Moulage de la plaque
4) Réticulation dans l'eau en présence de catalyseur DBTDL

Tableau 5: Résultats avec le polyéthylène linéaire basse densité irradié sous forme de poudre

| Composition | Durée de malaxage (min) | Taux de gel (extraction 24 h-toluène) % | Fluage: (2 bars - 200°C - 15 min) % |
|---|---|---|---|
| 83,25% PEBD | 2 | 65 | 130 |
| 16,75% UNIFOS 2,5 Mrads | 3 | 70 | 70 |
| 4,5% VTMES | 5 | 77 | 35 |
| 66,65% PEBD | 2 | 68 | cassant |
| 33,35% UNIFOS 2,5 Mrads | 3 | 70 | 75 |
| 4,5% VTMES | 5 | 76 | 25 |
| 50% PEBD | 2 | 57 | 55 |
| 50% UNIFOS 2,5 Mrads | 3 | 71 | 50 |
| 4,5% VTMES | 5 | 77 | 65 |

Des temps de malaxage de trois minutes correspondent, en fait, à des temps comparables à ceux de résidence dans une extrudeuse en cours d'extrusion.

Il a été vérifié que l'activité de ce polyéthylène irradié est restée constante après un stockage de 1 à 5 mois après irradiation. L'utilisation de ce polymère sous forme de poudre au cours de l'irradiation donne les meilleurs résultats en ce qui concerne l'aspect de l'extrudat et le niveau de réticulation pour des temps de malaxage très courts.

Les vinylsilanes utilisables dans le procédé de l'invention sont du type $R_1-Si(R_2)_3$, où $R_1$ représente un radical hydrocarboné, hydrocarbonoxy insaturé aminé ou non et monovalent, et $R_2$ représente un radical méthoxy ou

éthoxy, méthoxy-éthoxy, acétoxy ou halogéné. Le nombre de réticulations formées par unité de poids diminue avec l'augmentation de la masse molaire du vinylsilane. De ce point de vue, le vinyltriméthoxysilane est préférable, mais sa toxicité et son point d'ébullition peu élevé (124°C) necessitent l'emploi de mesures de sécurité particulières.

Des essais avec le vinyltriéthoxysilane et le vinyltriéthoxyméthoxysilane ont montré que des concentrations de 2 à 3% étaient préférables pour une bonne efficacité, des concentrations supérieures n'étant pas préjudiciables, mais n'améliorant pas notablement les propriétés du polymère réticulé.

Des catalyseurs de réticulation de silanol sont bien connus dans la technique et comprennent entre autres des carboxylates de métaux comme: dilaurate, dioctoate et diacétate de plomb, de zinc et d'étain et analogues, ou autres acides de Lewis. L'invention n'est cependant pas limitée à l'utilisation d'un catalyseur particulier.

D'autre part, parmi ces composés, le vinyltrichlorosilane et le vinyltriacétoxysilane présentent l'avantage d'être auto-réticulants sous l'action de l'humidité. L'addition de catalyseur de condensation (DBTDL) par exemple, n'est plus requise dans ce cas. Néanmoins, le choix de ces composés du silane devra tenir compte de leur influence négative sur les propriétés électriques du polymère réticulé.

EXEMPLE 7

Dans cet exemple, on se sert de vinyltriacétoxysilane pour assurer la réticulation du polyéthylène en présence d'humidité et en l'absence de catalyseur de condensation supplémentaire de type DBTDL.

Le polyéthylène UNIFOS 8010 est irradié à 2,5 Mrads.

On réalise un mélange de 66,5 parts de STAMYLAN 2810 avec 33,5 parts de polyéthylène irradié, le tout en

présence de 3,5 parts de vinyltriacétoxysilane (A 188 fourni par UNION CARBIDE). La température de malaxage est de 180°C.

On retire le polymère greffé et on presse le tout pour en faire une plaque de 1,5 mm d'épaisseur.

Cette plaque est mise une heure au contact de l'eau bouillante, sans catalyseur de condensation supplémentaire.

Un échantillon de la plaque présente alors un taux d'insoluble de 76% après extraction de 24h dans le xylène bouillant, ce qui prouve bien que le vinyltriacétoxysilane est un agent auto-réticulant en présence d'humidité.

Dans les exemples, l'irradiation a été effectuée au moyen de rayons gamma. On peut cependant utiliser d'autres rayonnements ionisants comme des rayons X, des particules accélérées, et analogues. Selon l'invention, les doses de rayonnement sont comprises entre 0,3 et 15 Mrads, et se situent de préférence au-dessous de 2,5 Mrads, pour des raisons économiques évidentes.

Des essais ont d'autre part montré que l'intensité du rayonnement n'est pas un paramètre significatif, pour autant qu'elle soit suffisamment peu élevée pour permettre la diffusion de l'oxygène dans la matière.

Les paramètres du malaxage qui influencent le résultat du greffage sont la température imposée au malaxeur, la température de la masse du polymère, la vitesse de rotation des outils de malaxage et la durée de l'opération. Seule la durée est un paramètre indépendant, une variation de la température imposée ou de la vitesse de rotation entraînant toujours une variation de la température du polymère. Dans le procédé de l'invention, on a trouvé que la température imposée au malaxeur ne doit pas être inférieure à 140°C pour faciliter la fusion du polymère, et ne doit pas être supérieure à 190°C sans addition d'anti-oxydant.

Le choix de cet anti-oxydant devra tenir compte de

son effet inhibiteur sur la réaction de greffage des silanes.

Lors du malaxage, on peut bien sûr incorporer à la masse polymère des charges et adjuvants bien connus dans la technique, sans sortir du cadre de l'invention.

Egalement, bien que les exemples ci-dessus concernent tous le polyéthylène, auquel s'applique particulièrement bien le procédé de l'invention, le procédé s'applique également à d'autres polyoléfines thermoplastiques et élastomériques telles que des copolymères oléfine-acrylate, oléfine-vinyl acétate, oléfine acrylonitrile et analogues, et leurs mélanges.

Les deux exemples qui suivent se rapportent à l'application du procédé à un copolymère éthylène-vinyl acétate.

EXEMPLE 8

Dans cet exemple, on a irradié le polyéthylène UNIFOS 8010 sous air à une dose de 2,5 Mrads. On l'a ensuite chauffé pendant deux heures à 90-95°C en étuve.

On malaxe 66,5% de copolymère éthylène-vinyl acétate (Escorène Ultra UL 00112 de ESSOCHEM, à 12% de vinyl acétate) avec 33,5% du polyéthylène irradié et chauffé. Le malaxage se fait en présence de 4,5% du silane A 172, à une température de 180°C.

Après réticulation dans l'eau bouillante en présence de DBTDL, le taux de fluage (200°C, 15 minutes, 2 bars) vaut 35%

EXEMPLE 9

Dans cet exemple, on a irradié le polyéthylène UNIFOS 8010 sous air à une dose de 2,5 Mrads.

On introduit 33 gr de copolymère éthylène-vinyl acétate (Escorène Ultra UL 00328 de ESSOCHEM) dans le Brabender, que l'on fait fonctionner à 30 t/min. Dès que le produit est visqueux, on y ajoute 3 ml (6,5 à 7 parts du mélange final) de silane A172 (vinyltriméthoxyéthoxysilane).

Après répartition du silane, on introduit dans le Brabender 11 gr du polythylène irradié et, après homogénéisation, on malaxe à 60 t/min.

Le couple au Brabender se stabilise en 3 minutes, et on introduit 8 gouttes de catalyseur de réticulation (DBTDL). La température interne est de 160°C, et passe à 175°C en 15 minutes, tandis que le couple au Brabender augmente de 40 à 50% par rapport à sa valeur stabilisée précédente.

Avec le produit obtenu, on prépare une plaque par pressage à 170°C, et on y découpe des éprouvettes que l'on soumet à hydrolyse pendant 1,5h, dans de l'eau à 70°C.

Une mesure du fluage (1 bar, 10 minutes, 150°C) donne une valeur de l'ordre de 40%, et l'on vérifie que ces échantillons, mis sur une plaque métallique à 250°C ne peuvent plus atteindre l'état visqueux.

Les propriétés mécaniques du mélange sont les suivantes:

- tension de rupture: 1.998 N/cm$^2$ (CV 15%)
- allongement à la rupture: 502% (CV 7%)
- module à 100%: 577 N/cm$^2$.

REVENDICATIONS

1. Procédé de production de centres actifs, oxygénés, stables, dans une composition formée d'une polyoléfine ou un mélange de polyoléfines, par irradiation de la composition et oxygénation, caractérisé en ce que l'irradiation est conduite en présence d'air, pour réaliser une oxygénation des centres actifs sous irradiation.

2. Procédé selon la revendication 1, caractérisé en ce qu'il consiste à soumettre la composition irradiée à une dose de rayonnement comprise entre 0,3 et 15 Mrad.

3. Produit intermédiaire pour la production de polyoléfines réticulables par greffage d'un composé hydrolysable du silane, caractérisé en ce qu'il est formé d'une composition formée d'une polyoléfine ou un mélange de polyoléfines, irradiée par le procédé de la revendication 1 ou 2.

4. Produit intermédiaire selon la revendication 3, caractérisé en ce qu'il comprend un catalyseur de condensation de silanol.

5. Procédé de production de polyoléfines réticulables par greffage d'un composé hydrolysable du silane, caractérisé en ce qu'il consiste à malaxer la composition irradiée selon la revendication 3 ou 4 avec une composition de polyoléfine non irradiée et un composé hydrolysable du silane.

6. Procédé selon la revendication 5, caractérisé en ce que le malaxage se fait en présence d'un catalyseur de condensation de silanol.

7. Procédé selon la revendication 5 ou 6, caractérisé en ce que la composition irradiée et la composition non irradiée sont identiques et sont formées d'une seule polyoléfine.

8. Procédé selon la revendication 5 ou 6, caractérisé en ce que la composition irradiée est formée d'une seule polyoléfine, et la composition non irradiée

d'un mélange de polyoléfines.

9. Procédé selon l'une quelconque des revendications 5 à 8, caractérisé en ce qu'il consiste de plus à chauffer la composition irradiée avant malaxage.

10. Procédé selon l'une quelconque des revendications 5 à 9, caractérisé en ce qu'il consiste à malaxer un mélange comprenant, sur base de 100% en poids:

- 1 à 10% en poids du composé du silane
- 0 à 80% en poids de la composition non irradiée
- 10 à 98% en poids de la composition irradiée

11. Procédé selon la revendication 10, caractérisé en ce que le malaxage se fait en présence d'une quantité de 0,07 à 1% en poids, sur base du poids du mélange, de catalyseur de réticulation.

12. Procédé selon l'une quelconque des revendications 5 à 11, caractérisé en ce que la composition irradiée est chauffée à une température de l'ordre de 100°C avant malaxage.

13. Procédé selon l'une quelconque des revendications 5 à 12, caractérisé en ce que le composé hydrolysable du silane est un vinylsilane de formule $R_1-Si(R_2)_3$, dans laquelle $R_1$ représente un radical hydrocarboné, hydrocarbonoxy insaturé aminé ou non et monovalent, et $R_2$ représente un radical méthoxy, éthoxy, méthoxy-éthoxy, acétoxy ou halogéné.

14. Procédé selon l'une quelconque des revendications 5 à 13, caractérisé en ce que le catalyseur de réticulation est un composé organique de l'étain, du plomb ou du zinc de type dilaurate, diacétate ou dioctoate de dibutyle, ou un acide de Lewis.

15. Procédé selon la revendication 10, caractérisé en ce que le composé du silane est choisi dans le groupe du vinyltrichlorosilane et du vinyltriacétoxysilane.